(19) Europäisches Patentamt
European Patent Office
Office européen des brevets

(11) Publication number: 0 244 678 B1

(12) EUROPEAN PATENT SPECIFICATION

(45) Date of publication of patent specification: 04.07.90

(51) Int. Cl.[5]: C 08 F 4/64, C 08 F 10/00

(21) Application number: 87105595.0

(22) Date of filing: 15.04.87

# (54) Process for producing alpha-olefin polymer.

(30) Priority: 28.04.86 JP 99211/86

(43) Date of publication of application:
11.11.87 Bulletin 87/46

(45) Publication of the grant of the patent:
04.07.90 Bulletin 90/27

(84) Designated Contracting States:
BE DE ES FR GB IT NL

(56) References cited:
EP-A- 196 585
EP-A- 206 817
EP-A-0 026 027
EP-A-0 111 902
FR-A-2 265 768
GB-A-2 167 762
US-A-4 335 016

(73) Proprietor: SUMITOMO CHEMICAL COMPANY, LIMITED
Kitahama 4-chome 5-33
Chuo-ku Osaka 541 (JP)

(72) Inventor: Sasaki, Toshio
9-422 Yushudainishi-1-chome
Ichihara-shi (JP)
Inventor: Ebara, Takeshi
135, Iriyamazu
Ichihara-shi (JP)
Inventor: Kawai, Kiyoshi
2434-155, Hanazonocho
Chiba-shi (JP)
Inventor: Shiga, Akinobu
832-4, Shiizu
Ichihara-shi (JP)

(74) Representative: Vossius & Partner
Siebertstrasse 4 P.O. Box 86 07 67
D-8000 München 86 (DE)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a solid catalyst component having a high activity per transition metal contained therein, a catalyst system for olefin polymerization using said solid catalyst component, and a process for producing alpha olefin-polymer using said catalyst system. More particularly, the present invention relates to a process for producing an alpha-olefin polymer according to slurry polymerization, bulk polymerization or gas phase polymerization, wherein use of a solid catalyst component having a high catalyst activity per transition metal and capable of producing a polymer of high stereoregularity requires no removal of catalyst residue and amorphous polymer and, moreover, the adequately controlled particle shape of said solid catalyst component enables production of an alpha-olefin polymer of high bulk density and low fine particle content.

Description of the prior art

It is well known that so-called Ziegler-Natta catalysts consisting of a compound of a transition metal of groups IV to VI of periodic table and an organometal compound of a metal of groups I to III are used in production of alpha-olefin (e.g. propylene or butene-1), polymer.

In particular, catalysts containing titanium trichloride are in wide use industrial production of alpha-olefin polymer.

In this production, however, an amorphous polymer is formed as a by-product, in addition to an alpha-olefin polymer of high stereoregularity and accordingly of high industrial value.

This amorphous polymer has a low industrial value and, when said alpha-olefin polymer is processed into a film or a fiber greatly deteriorates the mechanical properties of the processed material.

Moreover, formation of the amorphous polymer incurs loss of raw material monomer(s) and inevitably requires an additional facility for removal of the amorphous polymer, which are very large disadvantages from an industrial standpoint.

Therefore, no or very slight formation of such an amorphous polymer can provide a very large benefit.

Further in the above production of alpha-olefin polymer, a catalyst residue remains in the alpha-olefin polymer formed and adversely affects the stability or processability of the alpha-olefin polymer. Consequently, an additional facility for catalyst residue removal and polymer stabilization becomes necessary.

This deterioration of the properties of the alpha-olefin polymer can be improved if the catalyst used has a higher catalyst activity expressed as weight of alpha-olefin polymer formed per unit weight of catalyst. Moreover, use of such a catalyst requires no facility for catalyst residue removal and enables a reduction in production cost of alpha-olefin polymer.

The present inventors had previously found and disclosed in Japanese Patent Application Kokai (Laid-Open) No. 218606/1986 that a catalyst system comprising

(A) a solid catalyst component containing a trivalent titanium compound, which is obtained by reducing a titanium compound represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$) with an organomagnesium compound in the presence of an organosilicon compound having at least one Si-O bond to obtain a solid product, then treating the solid product with an ester compound and a mixture of an ether compound and titanium tetrachloride,

(B) an organoaluminium compound, and

(C) a silicon compound having at least one $Si\text{-}OR^2$ bond (wherein $R^2$ is a hydrocarbon group having 1 to 20 carbon atoms) shows a high catalyst activity and produces an alpha-olefin polymer of high stereoregularity in polymerization of alpha-olefin.

In practical (industrial) use of solid catalyst such as Ziegler-Natta catalyst, the particle shape of the solid catalyst is very important to control the bulk density, particle size and flow property of the polymer obtained. The solid catalyst according to the above invention is not satisfactory with respect to the particle shape.

With respect to the improvement of the particle shape of solid catalyst, it was tried to use, in ethylene polymerization, a solid catalyst which is a titanium-magnesium compound supported by silica gel. [See Japanese Patent Application Kokai (Laid-Open) Nos. 148093/1979 and 47407/1981.]

Under the above mentioned situations, the first object of the present invention is to provide a solid catalyst component having a high activity per transition metal and capable of producing a polymer of high stereoregularity. The second object of the present invention is to provide a catalyst system comprising said solid catalyst component, a specified organoaluminum compound and a specified silicone compound, and the third object of the present invention is to provide a process for producing an alpha-olefin polymer using said catalyst system.

According to the present invention there are provided a solid catalyst component containing a trivalent titanium compound, which is obtained by reducing a titanium compound represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$) with an organomagnesium compound in the presence of an organosilicon compound having at least one Si-O bond and a silica gel having a pore volume of, at a pore radius of 7.5 to 2000 nm (75 to 20,000 Å), at least 0.65 ml/g to obtain a solid product, treating the solid product with an ester

compound, and treating the ester-treated solid with a mixture of an ether compound and titanium tetrachloride, a catalyst system comprising:

(A) said solid catalyst component,

(B) an organoaluminum compound, and

(C) a silicon compound having at least one Si-$OR^2$ bond (wherein $R^2$ is a hydrocarbon group having 1 to 20 carbon atoms), and

a process for producing an alpha-olefin polymer, which comprises homopolymerizing an alpha-olefin or copolymerizing alpha-olefins using said catalyst system.

The use of said solid catalyst component having a high activity per transition metal and capable of producing a polymer of high stereoregularity requires no removal of catalyst residue and amorphous polymer and, moreover, the adequately controlled particle shape of said solid catalyst component enables production of an alpha-olefin polymer of high bulk density and low fine particle content.

In the accompanying drawings, Figure 1 shows particle size distribution curves of polypropylene powders. The solid line "————" (A) is a particle size distribution curve of the polypropylene powder obtained in Example 1 and the broken line "- - - - -" (B) is a particle size distribution curve of the polypropylene obtained in Comparative Example 1.

Figure 2 is a flow chart prepared for easier understanding of the present invention. This chart represents a typical embodiment of the present invention but in no way restricts the present invention.

The present invention will be explained specifically below.

(a) Titanium compound

The titanium compound used in the present invention is represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$). As specific examples of the $R^1$, there can be mentioned alkyl groups such as methyl, ethyl, n-propyl, isopropyl, n-butyl, isobutyl, n-amyl, isoamyl, n-hexyl, n-heptyl, n-octyl, n-decyl or n-dodecyl; aryl groups such as phenyl, cresyl or xylyl, naphthyl; cycloalkyl groups such as cyclohexyl or cyclopentyl; allyl groups such as propenyl; and aralkyl groups such as benzyl.

Alkyl groups of 2 to 18 carbon atoms and aryl groups of 6 to 18 carbon atoms are preferred. Straight chain alkyl groups of 2 to 18 carbon atoms are particularly preferred.

It is possible to use a titanium compound of at least two different $OR^1$ groups.

As the halogen atom represented by X, there can be mentioned chlorine, bromine, and iodine. In particular, chlorine gives a preferable result.

The n of the titanium compound represented by the general formula $Ti(OR^1)_nX_{4-n}$ is a number satisfying $0<n\leqq4$, preferably a number satisfying $2\leqq n\leqq4$, particularly preferably 4.

For synthesis of a titanium compound represented by the general formula $Ti(OR^1)_nX_{4-n}$ ($0<n\leqq4$), there can be used known methods. There can be used, for example, a method of reacting $Ti(OR^1)_4$ and $TiX_4$ in predetermined proportions, or a method of reacting $TiX_4$ and a corresponding alcohol in predetermined proportions.

(b) Organosilicon compound having at least one Si-O bond

As the organosilicon compound having at least one Si-O bond, used in synthesis of the solid catalyst component of the present invention, there are used those represented by the following general formulas

$$Si(OR^3)_mR^4_{4-m}$$

$$R^5(R^6_2SiO)_pSiR^7_3 \text{ and}$$

$$(R^8_2SiO)_q$$

(wherein $R^3$ is a hydrocarbon group of 1 to 20 carbon atoms; $R^4$, $R^5$, $R^6$, $R^7$ and $R^8$ are each a hydrocarbon group of 1 to 20 carbon atoms or a hydrogen atom; m is a number satisfying $0<m\leqq4$; p is an integer of 1 to 1000; and q is an integer of 2 to 1000).

As specific examples of the organosilicon compound, there can be mentioned the following

Tetramethoxysilane, dimethyldimethoxysilane, tetraethoxysilane, triethoxyethylsilane, diethoxydiethylsilane, ethoxytriethylsilane, tetraisopropoxysilane, diisopropoxydiisopropylsilane, tetrapropoxysilane, dipropoxydipropylsilane, tetra-n-butoxysilane, di-n-butoxydi-n-butylsilane, dicyclopentoxydiethylsilane, diethoxydiphenylsilane, triethoxyphenylsilane, hexamethyldisiloxane, hexaethyldisiloxane, hexapropyldisiloxane, octaethyltrisiloxane, dimethylpolysiloxane, diphenylpolysiloxane, methylhydropolysiloxane and phenylhydropolysiloxane.

Of these organosilicon compounds, alkoxysilane compounds represented by the general formula $Si(OR^3)_mR^4_{4-m}$ are preferable. The alkoxysilane compounds of $1\leqq m\leqq4$, particularly the tetraalkoxysilane compounds of m=4 are more preferable.

(c) Organomagnesium compound

The orgamomagnesium compound used in the present invention can be any organomagnesium

compound having at least one magnesium-carbon bond. Particularly, Grignard compounds represented by the general formula $R^9MgX$ (wherein $R^9$ is a hydrocarbon group having 1 to 20 carbon atoms and X is a halogen atom) and dialkyl- or diarylmagnesium compounds represented by the general formula $R^{10}R^{11}Mg$ (wherein $R^{10}$ and $R^{11}$ are each a hydrocarbon atom having 1 to 20 carbon atoms) are used preferably. $R^9$, $R^{10}$ and $R^{11}$ may be same or different and are each an alkyl, aryl, aralkyl or alkenyl group such as methyl, ethyl, n-propyl, isopropyl, n-butyl, sec-butyl, tert-butyl, n-amyl, isoamyl, n-hexyl, n-octyl, 2-ethylhexyl, phenyl or benzyl.

As specific examples of the Grignard compounds, there can be mentioned methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, n-amylmagnesium chloride, isoamylmagnesium chloride, phenylmagnesium chloride and phenylmagnesium bromide. As specific examples of the compounds represented by the general formula $R^{10}R^{11}Mg$, there can be mentioned diethylmagnesium, di-n-propylmagnesium, diisopropylmagnesium, di-n-butylmagnesium, di-sec-butylmagnesium, di-tert-butylmagnesium, n-butyl-sec-butylmagnesium, di-n-amylmagnesium and diphenylmagnesium.

In synthesis of an organomagnesium compound, there can be used an ether solvent such as diethyl ether, di-n-propyl ether, diisopropyl ether, di-n-butyl ether, diisobutyl ether, di-n-amyl ether, diisoamyl ether, di-n-hexyl ether, di-n-octyl ether, diphenyl ether, dibenzyl ether, phenetol, anisole, tetrahydrofuran or tetrahydropyran. Alternatively, there can be used a hydrocarbon solvent such as hexane, heptane, octane, cyclohexane, methylcyclohexane, benzene, toluene or xylene, or a mixture of an ether solvent and a hydrocarbon solvent. It is preferable that the organomagnesium compound is used as an ether solution. As the ether, there is used an ether compound having at least 6 carbon atoms in the molecule, or an ether compound having a ring structure.

It is particularly preferable from the standpoint of catalyst performance that a Grignard compound represented by $R^9MgCl$ is used as an ether solution.

In place of the organomagnesium compound, it is possible to use a hydrocarbon-soluble complex between one of the above organomagnesium compounds and an organometal compound. As examples of the organometal compound, there can be mentioned those of Li, Be, B, Al or Zn.

(d) Silica gel

The silica gel used in synthesis of the solid catalyst component of the present invention has a particle diameter distribution of preferably 5 to 250 µm, more preferably 10 to 200 µm. Also, the silica gel has an average particle diameter of preferably 10 to 200 µm, more preferably 20 to 150 µm.

Further, the silica gel has an average pore radius of preferably at least 7.5 nm (75 Å), more preferably at least 9.0 nm (90 Å). Furthermore, the silica gel has a pore volume of, at a pore radius of 7.5 to 2000 nm (75 to 20,000 Å), at least 0.65 ml/g, preferably at least 0.8 ml/g.

Preferably, the silica gel is used in a state wherein the gel contains no adsorbed water. For example, the silica gel is used after calcining at temperatures of about 500°C or above or drying at temperatures of about 100°C or above and then treating with an organometal compound such as an organomagnesium compound or the like.

(e) Ester compound

As the ester compound used in synthesis of the solid catalyst component of the present invention, there can be used monovalent or multivalent carboxylic acid esters, which are aliphatic carboxylic acid esters, olefinic carboxylic acid esters, alicyclic carboxylic acid esters and aromatic carboxylic acid esters. Specific examples of these carboxylic acid esters include methyl acetate, ethyl acetate, phenyl acetate, methyl propionate, ethyl propionate, ethyl butyrate, ethyl valerate, methyl acrylate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methyl ethyl phthalate, diethyl phthalate, di-n-propyl phthalate, diisopropyl phthalate, di-n-butyl phthalate, diisobutyl phthalate, di-n-heptyl phthalate, di-n-octyl phthalate and diphenyl phthalate.

Of these ester compounds, olefinic carboxylic acid esters (e.g. methacrylic acid esters, maleic acid esters) and phthalic acid esters are preferred. Diesters of phthalic acid are particularly preferred.

(f) Ether compound

As the ether compound used in the present invention, dialkyl ethers such as diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether and ethyl isobutyl ether are preferred.

Of these dialkyl ethers, di-n-butyl ether and diisoamyl ether are particularly preferred.

(g) Synthesis of solid catalyst component (A)

The solid catalyst component (A) of the present invention is synthesized by reducing a titanium compound as mentioned above with an organomagnesium compound as mentioned above, in the

presence of an organosilicon compound as mentioned above and a silica gel as mentioned above, to obtain a solid product and treating this solid product with an ester compound as mentioned above and a mixture of an ether compound as mentioned above and titanium tetrachloride. Preferably, the treatment of the solid product is conducted firstly with the ester compound and then with said mixture.

All the procedures of the above synthesis are conducted in an inert gas atmosphere such as nitrogen or argon.

In obtaining the solid product by reducing the titanium compound with the organomagnesium compound in the presence of the organosilicon compound and the silica gel, it is preferred that precipitation of the solid product due to the reduction takes place on the silica gel particles and that the solid product has a shape of silica gel and is not fine powder.

The reduction of the titanium compound with the organomagnesium compound is conducted, for example, by adding the organomagnesium compound to a mixture of the titanium compound, the organosilicon compound and the silica gel.

Preferably, the titanium compound, the organosilicon compound and the silica gel are used after dissolving in or diluting with an appropriate solvent.

As such a solvent, there can be mentioned aliphatic hydrocarbons such as hexane, heptane, octane or decane; aromatic hydrocarbons such as toluene or xylene; alicyclic hydrocarbons such as cyclohexane, methylcyclohexane or decalin; and ether compounds such as diethyl ether, dibutyl ether, diisoamyl ether or tetrahydrofuran.

The reduction is conducted at temperatures of −50° to 70°C, preferably −30° to 50°C, particularly preferably −25° to 35°C.

The duration of reduction has no particular restriction but ordinarily is about 10 minutes to about 6 hours. After the reduction, a post-reaction may be conducted at 20° to 120°C.

The amount of organosilicon compound used is 1 to 50, preferably 3 to 30, particularly preferably 5 to 25 in terms of Si/Ti, namely, the atomic ratio of silicon atom to titanium atom in titanium compound.

The amount of organomagnesium compound used is 0.1 to 10, preferably 0.2 to 5.0, particularly preferably 0.5 to 2.0 in terms of (Ti+Si)/Mg, namely, the atomic ratio of the sum of titanium atom and silicon atom to magnesium atom.

The amount of silica gel used is 20 to 90% by weight, preferably 30 to 75% by weight in terms of % by weight in solid product.

The solid product obtained by the above reduction is separated in accordance with a solid-liquid separation procedure and then washed with an inert hydrocarbon solvent such as hexane or heptane several times.

The thus obtained solid product is then treated with the ester compound.

The amount of ester compound used is 0.1 to 50 moles, preferably 0.3 to 20 moles, particularly preferably 0.5 to 10 moles per 1 mole of titanium atom in solid product.

The amount of ester compound used is 0.01 to 1.0 mole, preferably 0.03 to 0.5 mole per 1 mole of magnesium atom in solid product.

The treatment of the solid product with the ester compound can be conducted in accordance with any known method capable of contacting them with each other, such as a slurry method or a mechanical grinding method using a ball mill. However, the mechanical grinding method is not preferred from industrial standpoints because the final solid catalyst component contains a large amount of fine particles and resultantly has a wide particle size distribution. Preferably, the solid product and the ester compound are contacted with each other in the presence of a diluent.

As the diluent, there can be used aliphatic hydrocarbons such as pentane, hexane, heptane or octane; aromatic hydrocarbons such as benzene, toluene or xylene; alicyclic hydrocarbons such as cyclohexane or cyclopentane; and halogenated hydrocarbons such as 1,2-dichloroethane or monochlorobenzene. Of these, aromatic hydrocarbons and halogenated hydrocarbons are particularly preferred.

The amount of diluent used is 0.1 to 1000 ml, preferably 1 to 100 ml per 1 g of solid product. The treatment temperature is −50° to 150°C, preferably 0° to 120°C. The treatment time is at least 10 minutes, preferably 30 minutes to 3 hours. After the treatment, the mixture is allowed to stand and subjected to solid-liquid separation. The solid portion is washed with an inert hydrocarbon solvent several times to obtain an ester-treated solid.

Alternatively, the treatment of the solid product with the ester compound can be conducted simultaneously with the subsequent treatment with a mixture of the ether compound and titanium tetrachloride, by allowing the ester compound to coexist with the mixture of the ether compound and titanium tetrachloride.

The treatment of the ester-treated solid with the mixture of the ether compound and titanium tetrachloride is conducted preferably in a slurry state. As the solvent used in slurry formation, there can be mentioned aliphatic hydrocarbons such as pentane, hexane, heptane, octane or decane; aromatic hydrocarbons such as toluene or xylene; alicyclic hydrocarbons such as cyclohexane, methylcyclohexane or decalin; and halogenated hydrocarbons such as dichloroethane, trichloroethane, trichloroethylene, monochlorobenzene, dichlorobenzene or trichlorobenzene.

The slurry concentration is 0.05 to 0.5 g solid/ml solvent, preferably 0.1 to 0.4 g solid/ml solvent.

The treatment temperature is 30° to 150°C, preferably 45° to 120°C, particularly preferably 60° to 100°C.

The treatment time has no particular restriction but ordinarily is preferred to be 30 minutes to 6 hours.

Mixing of the ester-treated solid, the ether compound and titanium tetrachloride can be conducted by a method of adding the ether compound and titanium tetrachloride to the ester-treated solid, or by a method of adding the ester-treated solid to a solution of the ether compound and titanium tetrachloride.

The method of adding the ether compound and titanium tetrachloride to the ester-treated compound is conducted by adding the ether compound and titanium tetrachloride in this order to the ester-treated solid, or preferably by adding the ether compound and titanium tetrachloride simultaneously to the ester-treated solid, or more preferably by adding a premix of the ether compound and titanium tetrachloride to the ester-treated solid.

The treatment of the ester-treated solid with the mixture of ether compound and titanium tetrachloride may be conducted two times or more. The treatment of two times or more with the mixture of ether compound and titanium tetrachloride is preferably from the standpoints of the catalyst activity and the stereoregularity of the polymer produced.

The amount of ether compound used is 0.1 to 100 moles, preferably 0.5 to 50 moles, particularly preferably 1 to 20 moles per 1 mole of titanium atom contained in the ester-treated solid.

The amount of titanium tetrachloride used is 2 to 2000 moles, preferably 10 to 1000 moles, particularly preferably 30 to 800 moles per 1 mole of titanium atom contained in the ester-treated solid.

The amount of titanium tetrachloride used per 1 mole of ether compound is 1 to 100 moles, preferably 1.5 to 75 moles, particularly preferably 2 to 50 moles.

The thus obtained solid catalyst component containing a trivalent titanium compound is subjected to a solid-liquid separation procedure, then washed with an inert hydrocarbon solvent such as hexane or heptane several times, and subsequently used for alphaolefin polymerization.

It is preferable from the standpoints of the catalyst activity of the final solid catalyst component obtained and the stereoregularity of the polymer produced using the catalyst component that the solid catalyst component after solid-liquid separation is washed with an excessive amount of an aromatic hydrocarbon solvent (e.g. toluene) or a halogenated hydrocarbon solvent (e.g. monochlorobenzene) at least once at 50° to 120°C and then with an aliphatic hydrocarbon solvent (e.g. hexane) several times and subsequently is used for alpha-olefin polymerization.

(h) Organoaluminum compound (B)

The organoaluminum compound (B) used in the present invention together with the above mentioned solid catalyst component (A) and the silicon compound (C) described later has at least one Al-C bond in the molecule. Typical of the organoaluminum compound are represented by the following general formulas

$$R^{12}{}_{\gamma}AlY_{3-\gamma}$$

$$R^{13}R^{14}Al—O—AlR^{15}R^{16}$$

(wherein $R^{12}$, $R^{13}$, $R^{14}$, $R^{15}$ and $R^{16}$ are each a hydrocarbon group having 1 to 8 carbon atoms; Y is a halogen atom, a hydrogen atom or an alkoxy group; and $\gamma$ is a number satisfying $2 \leqq \gamma \leqq 3$).

Specific examples of the organoaluminum compound include trialkylaluminums such as triethylaluminum, triisobutylaluminum or trihexylaluminum; dialkylaluminum hydrides such as diethylaluminum hydride or diisobutylaluminum hydride; mixtures of a trialkylaluminum and a dialkylaluminum halide; and alkylalumoxanes such as tetraethyldialumoxane or tetrabutyldialumoxane.

Preferable of these organoaluminum compounds are trialkylaluminum, mixtures of a trialkylaluminum and a dialkylaluminum halide, and alkylalumoxanes. Particularly preferable are triethylaluminum, triisobutylaluminum, a mixture of triethylaluminum and diethylaluminum chloride, and tetraethyldialumoxane.

The amount of organoaluminum compound used can vary widely from 1 to 1000 moles per 1 mole of titanium atom in solid catalyst component. The amount is preferably 5 to 600 moles on the same basis.

(i) Silicon compound (C) having at least one Si—$OR^2$ bond

The silicon compound having at least one Si—$OR^2$ bond (wherein $R^2$ is a hydrocarbon group having 1 to 20 carbon atoms), used as the catalyst component (C) in the alpha-olefin polymerization of the present invention is preferred to be alkoxysilane compounds represented by the general formula $R^{17}{}_{a}Si(OR^2)_{4-a}$ (wherein $R^2$ and $R^{17}$ are each a hydrocarbon group of 1 to 20 carbon atoms and a is a number satisfying $0 \leqq a \leqq 3$).

Those alkoxysilane compounds wherein $R^2$ is a straight chain alkyl group of 1 to 10 carbon atoms and at least one of $R^{17}$s is an aryl group, are particularly preferred.

Specific examples of these alkoxysilane compounds include tetramethoxysilane, methyltrimethoxysilane, dimethyldimethoxysilane, ethyltrimethoxysilane, phenyltrimethoxysilane, phenylmethyldimethyoxysilane, tetraethoxysilane, methyltriethoxysilane, ethyltriethoxysilane, vinyltriethoxysilane, phenyltriethoxysilane, diphenyldimethoxysilane, diphenyldiethoxysilane, butyltriethoxysilane, tetrabutoxysilane, vinyltributoxysilane and diethyldiethoxysilane.

The amount of silicon compound having at least one Si—$OR^2$ bond to be used is 0.01 to 5 moles,

preferably 0.03 to 3 moles, particularly preferably 0.05 to 1.0 moles in terms of Si atom per 1 mole of aluminum atom in organoaluminum compound [catalyst component (B)].

(j) Process for alpha-olefin polymerization

Charging of three catalyst components (A), (B) and (C) into a polymerization vessel has no particular restriction except that they are charged in a water-free state in an inert gas such as nitrogen, argon or the like.

They can be charged separately, or any two of them can be contacted with each other before charging.

Alpha-olefin polymerization in the presence of the three catalyst components (A), (B) and (C) can be conducted at −30° to 200°C. However, the polymerization is preferably conducted ordinarily at 0° to 100°C because the polymerization at temperatures below 0°C incurs reduction in polymerization rate and the polymerization at temperatures above 100°C is unable to produce a polymer of high stereoregularity. The polymerization pressure has no particular restriction but it is preferably about 3 to 101 bar (3 to 100 atm) from industrial and economical standpoints. The polymerization can be continuous or batchwise. It can be slurry polymerization using an inert hydrocarbon solvent such as propane, butane, pentane, hexane, heptane or octane, or liquid phase polymerization using no solvent, or gas phase polymerization.

Alpha-olefins to which the process of the present invention can be applied are those of at least 3 carbon atoms. Specific examples of such alpha-olefins include propylene, butene-1, pentene-1, hexene-1, 3-methyl-pentene-1 and 4-methyl-pentene-1. However, the present process is in no way restricted to those alpha-olefins. The alpha-olefin polymerization of the present invention may be homopolymerization or copolymerization (including copolymerization with ethylene).

In the copolymerization, at least two olefins in a mixed state are contacted with the catalyst components (A), (B) and (C), whereby a copolymer can be obtained.

Also, heteroblock copolymerization wherein polymerization is conducted in two or more stages can easily be conducted according to the present process.

In the alpha-olefin polymerization of the present invention, it is also possible to add a chain transfer agent such as hydrogen or the like to control the molecular weight of polymer produced.

The present invention will be explained in more detail below by way of Examples and Comparative Examples. However, the present invention is in no way restricted to these Examples.

Example 1

(A) Synthesis of organomagnesium compound

A flask having an internal volume of 1 liter, equipped with a stirrer, a reflux condenser, a dropping funnel and a thermometer was purged with argon. Therein was placed 32.0 g of chipped magnesium for Grignard reagent.

120 g of n-butyl chloride and 500 ml of di-n-butyl ether were placed in the dropping funnel and about 30 ml of the mixture was dropped into the flask to start a reaction. In 4 hours after the start of the reaction, the remainder of the mixture was dropped at 50°C. After the dropping, the reaction was continued for further 1 hour at 60°C. Then, the reaction mixture was cooled to room temperature and the solid portion was removed by filtration.

n-Butylmagnesium chloride in di-n-butyl ether was hydrolyzed with 1 N sulfuric acid and then back titration was conducted with 1 N aqueous sodium hydroxide solution using phenolphthalein as an indicator to determine the concentration of n-butylmagnesium chloride. The concentration was 2.0 moles/liter.

(B) Synthesis of solid product

A flask having an internal volume of 200 ml, equipped with a stirrer and a dropping funnel was purged with agon. Therein were placed 34 ml of n-butyl ether and 8.6 g of a calcined silica gel obtained by calcining, in an argon atmosphere at 800°C for 6 hours, 952 Grade Silica Gel manufactured by Fuji Davison Kagaku K.K. which had, according to a porosimeter measurement, a pore volume [hereinafter abreviated to dVp (ml/g)] at pore radius of 7.5 to 2000 nm (75 to 20,000 Å), of 0.94 ml/g. While stirring the mixture in the flask at 80°C, 24.1 ml of the organomagnesium compound synthesized in the above (A) and placed in the dropping funnel was dropped in 1 hour. Stirring was continued for further 30 minutes at the same temperature. The resulting solid portion was washed with 34 ml of n-butyl ether once and then with 34 ml of n-heptane two times, followed by vacuum-drying to obtain 11.0 g of an organomagnesium-treated silica gel.

A flask having an internal volume of 200 ml, equipped with a stirrer and a dropping funnel was purged with argon. Therein were placed 11.0 g of the organomagnesium-treated silica gel prepared above, 55 ml of n-heptane, 0.64 g (1.9 mmol) of tetrabutoxytitanium and 6.61 g (31.7 mmol) of tetraethoxysilane. They were stirred for 30 minutes at room temperature.

16.9 ml of the organomagnesium compound synthesized in the above (A) and placed in the dropping funnel was dropped in 1 hour while keeping the temperature inside the flask at 5°C. After the dropping, the resulting mixture was stirred for 30 minutes at 5°C and for 1 hour at room temperature. The solid portion was washed with 55 ml of n-heptane three times and then vacuum-dried to obtain 16.3 g of a brown solid product.

The solid product contained 0.5% by weight of titanium atom and 6.1% by weight of magnesium atom.

(C) Synthesis of solid catalyst component

A flask having an internal volume of 100 ml was purged with argon. Therein were placed 7.3 g of the solid product synthesized in the reduction of the above (B), 22.8 ml of monochlorobenzene and 0.81 ml (3.0 mmol) of diisobutyl phthalate. They were subjected to a reaction for 1 hour at 80°C.

After the reaction, the reaction mixture was subjected to a solid-liquid separation procedure and the solid portion was washed with 25 ml of n-heptane two times.

After the washing, 22.8 ml of monochlorobenzene, 1.1 ml (6.3 mmol) of n-butyl ether and 19.1 ml (174 mmol) of titanium tetrachloride were placed in the flask. The resulting mixture was subjected to a reaction for 3 hours at 80°C. After the reaction, the reaction mixture was subjected to a solid-liquid separation procedure at 80°C and the solid portion was washed with 25 ml of monochlorobenzene two times at the same temperature. The above-mentioned treatment by a mixture of n-butyl ether and titanium tetrachloride was conducted again for 1 hour. The solid was washed with 25 ml of n-heptane two times and then vacuum-dried to obtain 7.2 g of a brown solid catalyst component.

The solid catalyst component contained 1.9% by weight of titanium atom, 9.0% by weight of magnesium atom and 1.7% by weight of phtalic acid esters.

(D) Polymerization of propylene

A stainless steel autoclave having an internal volume of 130 ml and of magnetic stirrer mixing type was purged with argon. Therein were placed 0.57 mmol of triethylaluminum, 0.057 mmol of phenyltriethoxysilane, 20.4 mg of the solid catalyst component prepared in the above (C) and 80 ml of liquefied propylene.

The mixture was stirred for 1 hour at 60°C. Excessive propylene was released and the polypropylene produced was air-dried for 24 hours. The polypropylene after air-drying weighed 14.3 g.

Therefore, the yield (g) of polypropylene per 1 g of solid catalyst component (this yield is hereinafter abbreviated to PP/cat) was 700.

The polypropylene powder obtained was subjected to extraction with boiling n-heptane for 6 hours. In this extraction, the percentage of residue (insoluble) [hereinafter abbreviated to IY (%)] was 96.6%. Further, the polypropylene powder had a bulk density [hereinafter abbreviated to BD (g/ml)] of 0.46 g/ml.

(E) Measurement of particle size distribution of polypropylene powder

The polypropylene powder obtained in the above (D) was subjected to sifting using JIS standard screens having an actual mesh size of 0.125 mm to 1.68 mm. Then, the polymer remaining on each screen was weighed and the ratio of the weight to the polymer total weight was calculated. These ratios were cumulated from the side of smallest particle diameter. The resulting cumulative ratios (% by weight) by sifting are shown in Table 1 and Figure 1. Also shown in Table 1 is the BD of the polypropylene powder.

Comparative Example 1

(A) Synthesis of solid product

A flask having an internal volume of 1 liter, equipped with a stirrer and a dropping funnel was purged with argon. Therein were placed 600 ml of n-heptane, 7.6 g (22.2 mmol) of tetrabutoxytitanium and 78.1 g (375 mmol) of tetraethoxysilane. They were mixed to form a homogenous solution and stirred for 30 minutes at room temperature. Then, 200 ml of the organomagnesium compound synthesized in the (A) of Example 1 and placed in the dropping funnel was dropped slowly 3 hours while keeping the temperature inside the flask at 5°C. After the dropping, stirring was continued for further 1 hour at room temperature. The reaction mixture was subjected to a solid-liquid separation procedure and the solid portion was washed with 600 ml of n-heptane three times and then vacuum-dried to obtain 64.5 g of a brown solid product.

(B) Synthesis of solid catalyst component

A flask having an internal volume of 200 ml was purged with argon. Therein were placed 17.10 g of the solid product synthesized in the reduction of the above (A), 85.5 ml of monochlorobenzene and 3.76 ml (14.0 mmol) of diisobutyl phthalate. They were subjected to a reaction for 1 hour at 80°C.

After the reaction, the reaction mixture was subjected to a solid-liquid separation procedure and the solid portion was washed with 90 ml of n-heptane two times.

After the washing, 85.5 ml of monochlorobenzene, 5.64 ml (33.3 mmol) of n-butyl ether and 100.9 ml (918 mmol) of titanium tetrachloride were placed in the flask, and the mixture was subjected to a reaction for 3 hours at 80°C. After the reaction, the reaction mixture was subjected to a solid-liquid separation procedure at 80°C and the solid portion was washed with 90 ml of monochlorobenzene two times at the same temperature. The above treatment by a mixture of n-butyl ether and titanium tetrachloride was conducted again for 1 hour. The solid portion was washed with 90 ml of n-heptane and then vacuum-dried to obtain 14.43 g of a brown solid catalyst component.

The solid catalyst component contained 2.7% by weight of titanium atom, 21% by weight of magnesium atom and 9.7% by weight of phthalic acid esters.

Using this solid catalyst component, a propylene polymerization was conducted in the same manner as in the (D) of Example 1. There were obtained PP/cat=4130, IY=96.4% and BD=0.30 g/ml.

The polypropylene powder obtained was measured for particle size distribution in the same manner as in the (E) of Example 1. The results are shown in Table 1 and Figure 1.

When the solid catalyst component is not supported by silica gel as compared with Example 1, the polymer obtained has a very low BD and contains a very large amount of fine powders of 500 µm or below in diameter.

Example 2

A solid catalyst component was synthesized in the same manner as in Example 1 except that (1) in the (B) of Example 1 (synthesis of solid product), there was used, as a silica gel, a silica gel obtained by vacuum-drying at 100°C Supermicrobead Silica Gel ID Type (dVp=0.85 ml/g, average pore radius=about 35.0 nm (350 Å)) manufactured by Fuji Davison Kagaku K.K. and (2) in the (C) of Example 1 (synthesis of solid catalyst component), toluene was used in place of monochlorobenzene and the reaction was conducted at 95°C in place of 80°C. The solid catalyst component obtained contained 1.1% by weight of titanium atom, 7.8% by weight of magnesium atom and 1.5% by weight of phthalic acid esters.

Using the solid catalyst component, propylene polymerization was conducted in the same manner as in the (D) of Example 1. There were obtained PP/cat=580, IY=96.8% and BD=0.43 g/ml.

The polypropylene powder obtained was measured for particle size distribution in the same manner as in the (E) of Example 1. The results are shown in Table 1.

Comparative Example 2

A solid catalyst component was synthesized in the same manner as in Example 1 except that in the (B) of Example 1 (synthesis of solid product), there was used, as a silica gel, a silica gel obtained by vacuum-drying at 100°C Supermicrobead Silica Gel 4B Type (dVp=0.15 ml/g) manufactured by Fuji Davison Kagaku K.K. The solid catalyst component contained 4.7% by weight of titanium atom and 8.1% by weight of magnesium atom.

Using the solid catalyst component, propylene polymerization was conducted in the same manner as in the (D) of Example 1. There were obtained PP/cat=230, IY=96.7% and BD=0.30 g/ml.

The polypropylene powder obtained was measured for particle size distribution in the same manner as in the (E) of Example 1. The results are shown in Table 1.

When the silica gel has a small dVp as compared with Examples 1 and 2, the polymer obtained has a very low BD and a very wide particle size distribution and contains a very large amount of fine powders.

TABLE 1

| Screen mesh (µm) | Cumulative ratio (% by weight) | | | |
|---|---|---|---|---|
| | Example 1 | Comparative Example 1 | Example 2 | Comparative Example 2 |
| 10 (1680) | 100.0 | 100.0 | 100.0 | 100.0 |
| 14 (1190) | 99.9 | 99.8 | 100.0 | 100.0 |
| 16 (1000) | 92.4 | 97.3 | 100.0 | 100.0 |
| 25 (710) | 56.8 | 88.4 | 100.0 | 100.0 |
| 30 (590) | 9.6 | 35.3 | 98.0 | 99.6 |
| 35 (500) | 2.3 | 19.8 | 94.0 | 96.1 |
| 40 (420) | 1.2 | 13.9 | 75.4 | 84.0 |
| 45 (350) | 0.7 | 9.5 | 47.3 | 64.1 |
| 50 (287) | 0.3 | 4.0 | 10.1 | 25.2 |
| 60 (250) | 0.3 | 2.0 | 3.3 | 12.2 |
| 80 (177) | 0.2 | 0.9 | 0.9 | 5.5 |
| 120 (125) | 0.2 | 0.3 | 0.2 | 2.8 |
| Pan (<125) | 0.1 | 0.1 | 0.1 | 1.0 |
| BD (g/ml) | 0.46 | 0.30 | 0.43 | 0.30 |

Comparative Example 3

A solid catalyst component was synthesized in the same manner as in Example 1, except that in the (B) of Example 1 (synthesis of solid product), there was used, as a silica gel, a silica gel obtained by vacuum-drying at 100°C Adsorb-SIL (a silica gel for gas chromatography column packing, having a dVp of 0.04 ml/g) manufactured by Nishio Kogyo K.K. The solid catalyst component contained 4.8% by weight of titanium atom and 0.05% by weight of magnesium atom.

Using the solid catalyst component, propylene polymerization was conducted in the same manner as in the (D) of Example 1. However, no polymer was formed.

In the solid-liquid separation in the above synthesis of solid catalyst component, it was visually seen that all the catalyst components other than the silica gel were dissolved and passed through the filter used.

When the silica gel used has a very small dVp as compared with Examples 1 and 2, the silica gel can not hold therein the solid catalyst component capable of effecting propylene polymerization.

Examples 3 and 4

Solid catalyst components were synthesized in the same manner as in Example 2 except that the silica gel used in Example 2 was replaced by the silica gel shown in Table 2. Using these solid catalyst components, propylene polymerization was conducted in the same manner as in the (D) and (E) of Example 1. The polymers obtained were measured for particle size distribution. The results are shown in Table 2.

Comparative Example 4

A solid catalyst component was synthesized in the same manner as in Example 2 except that there was used, as a silica gel, a silica gel obtained by vacuum-drying at 100°C Supermicrobead Silica Gel ID Type [dVp=0.64 ml/g (the pore volume at all the pore radius including those of below 7.5 nm (75 Å) and above 2000 nm (20000 Å) was 0.88 ml/g), average pore radius=about 9.0 nm (90 Å)] manufactured by Fuji Davison Kagaku K.K. The solid catalyst component contained 2.1% by weight of titanium atom and 7.4% by weight of magnesium atom.

Using the solid catalyst component, propylene polymerization was conducted in the same manner as in the (D) of Example 1. There were obtained PP/cat=550, IY=95.5% and BD=0.34 g/ml.

The polypropylene powder obtained was measured for particle size distribution in the same manner as in the (E) of Example 1. The results are shown in Table 3.

When the silica gel was about the same total pore volume but a smaller dVp as compared with Examples 2, 3 and 4, the polymer obtained has a low BD and contains a very large amount of the fine powders.

Further, when the silica gel has a small average pore radius, a large amount of unnecessary titanium tetrachloride is supported by the silica gel, which adversely affects the stereoregularity of the polymer formed.

TABLE 2

| | Silica gel (*) | | | Ti (%) | Mg (%) | PP/cat (g/g) | IY (%) | BD (g/ml) |
|---|---|---|---|---|---|---|---|---|
| | dVp (ml/g) | Total pore volume (ml/g) | Av. pore radius in nm (Å) | | | | | |
| Example 2 | 0.85 | 0.95 | 35.0 (350) | 1.1 | 7.8 | 580 | 96.8 | 0.43 |
| Example 3 | 0.82 | 1.00 | 26.0 (260) | 1.3 | 8.0 | 630 | 96.3 | 0.40 |
| Example 4 | 0.85 | 1.11 | 15.0 (150) | 1.5 | 7.6 | 660 | 96.1 | 0.39 |
| Comparative Example 4 | 0.64 | 0.88 | 9.0 (90) | 2.1 | 7.4 | 550 | 95.5 | 0.34 |

(*) Supermicrobead Silica Gel ID Type manufactured by Fuji Davison Kagaku K.K.

TABLE 3

| Screen mesh (μm) | Cumulative ratio (% by weight) | | | |
|---|---|---|---|---|
| | Example 2 | Example 3 | Example 4 | Comparative Example 4 |
| 10 (1680) | 100.0 | 100.0 | 100.0 | 100.0 |
| 14 (1190) | 100.0 | 100.0 | 100.0 | 100.0 |
| 16 (1000) | 100.0 | 100.0 | 100.0 | 100.0 |
| 25 (710) | 100.0 | 100.0 | 100.0 | 100.0 |
| 30 (590) | 98.0 | 98.0 | 99.7 | 99.2 |
| 35 (500) | 94.0 | 77.9 | 93.6 | 94.2 |
| 40 (420) | 75.4 | 46.8 | 67.2 | 78.5 |
| 45 (350) | 47.3 | 20.8 | 35.5 | 58.7 |
| 50 (287) | 10.1 | 3.1 | 4.6 | 30.9 |
| 60 (250) | 3.3 | 1.0 | 1.1 | 23.0 |
| 80 (177) | 0.9 | 0.3 | 0.3 | 17.2 |
| 120 (125) | 0.2 | 0.1 | 0.2 | 9.6 |
| Pan (<125) | 0.1 | 0.1 | 0.0 | 2.9 |
| BD (g/ml) | 0.43 | 0.40 | 0.39 | 0.34 |

Example 5

A solid catalyst component was synthesized in the same manner as in Example 2 except that the synthesis of solid product was conducted as follows.

(A) Synthesis of solid product

A flask having an internal volume of 200 ml, equipped with a stirrer and a dropping funnel was purged with argon. Therein were placed 17.6 ml of n-heptane, 0.20 g (0.59 mmol) of tetrabutoxytitanium, 2.04 g (9.82 mmol) of tetraethoxysilane and 3.50 g of a silica gel obtained by calcining 952 Grade Silica Gel (dVp=0.94 ml/g) manufactured by Fuji Davison Kagaku K.K., for 6 hours at 800°C in an argon atmosphere. They were stirred for 30 minutes at room temperature. Then, 5.77 ml of the organomagnesium compound synthesized in the (A) of Example 1 and placed in the dropping funnel was dropped in 1 hour while keeping the temperature inside the flask at 5°C. After the dropping, stirring was continued for 30 minutes at 5°C and then for 1 hour at room temperature. The solid portion was washed with 20 ml of n-heptane three times and vacuum-dried to obtain 5.70 g of a solid product.

Using this solid product, a solid catalyst component was synthesized in the same manner as in Example 2. The solid catalyst component contained 1.9% by weight of titanium atom and 6.1% by weight of magnesium atom.

Using the solid catalyst component, propylene polymerization was conducted in the same manner as in the (D) of Example 1. There were obtained PP/cat=860, IY=98.0% and BD=0.43 g/ml.

The polypropylene powder obtained was measured for particle size distribution in the same manner as in the (E) of Example 1. The results are shown in Table 4.

Example 6

A solid catalyst component was synthesized in the same manner as in Example 5 except that in the (A) of Example 5 (synthesis of solid product), the amount of each raw material was changed to the followings.

| | |
|---|---|
| Silica gel | 5.75 g |
| Tetrabutoxytitanium | 0.48 g (1.40 mmol) |
| Tetraethoxysilane | 5.04 g (24.2 mmol) |
| Organomagnesium compound | 14.2 ml |

The solid catalyst component contained 2.2% by weight of titanium atom and 8.6% by weight of magnesium.

Using the solid catalyst component, propylene polymerization was conducted in the same manner as in the (D) of Example 1. There were obtained PP/cat=1040, IY=96.9% and BD=0.43 g/ml.

The polypropylene powder obtained was measured for particle size distribution in the same manner as in the (E) of Example 1. The results are shown in Table 4.

TABLE 4

| Screen mesh (μm) | Cumulative ratio (% by weight) | |
|---|---|---|
| | Example 5 | Example 6 |
| 10 (1680) | 100.0 | 100.0 |
| 14 (1190) | 100.0 | 100.0 |
| 16 (1000) | 100.0 | 99.3 |
| 25 (710) | 98.9 | 85.4 |
| 30 (590) | 49.7 | 25.3 |
| 35 (500) | 15.6 | 8.8 |
| 40 (420) | 7.8 | 5.2 |
| 45 (350) | 4.6 | 3.1 |
| 50 (287) | 1.4 | 0.8 |
| 60 (250) | 0.7 | 0.3 |
| 80 (177) | 0.2 | 0.1 |
| 120 (125) | 0.1 | 0.0 |
| Pan (<125) | 0.0 | 0.0 |
| BD (g/ml) | 0.43 | 0.43 |

Examples 7 and 8

Solid catalyst components were synthesized in the same manner as in Example 2 except that in the synthesis of solid catalyst component of Example 2, the addition amount of diisobutyl phthalate was changed to those shown in Table 5. Using these solid catalyst components, propylene polymerization was conducted in the same manner as in the (D) of Example 1. The results are shown in Table 5.

The polypropylene powders obtained were measured for particle size distribution in the same manner as in the (E) of Example 1. The results are shown in Table 6.

TABLE 5

| | Amount of diisobutyl phthalate added (*) (mol/mol-Ti) | Ti (%) | Mg (%) | Phthalic acid ester (%) | PP/cat (g/g) | IY (%) | BD (g/ml) |
|---|---|---|---|---|---|---|---|
| Example 2 | 4.4 | 1.1 | 7.8 | 1.5 | 580 | 96.8 | 0.43 |
| Example 7 | 2.9 | 1.1 | 8.1 | 1.2 | 570 | 95.0 | 0.43 |
| Example 8 | 1.5 | 1.3 | 8.0 | 1.2 | 680 | 92.9 | 0.40 |

(*) Moles of diisobutyl phthalate per 1 mole of titanium atom contained in solid product.

TABLE 6

| Screen mesh (μm) | Cumulative ratio (% by weight) | | |
|---|---|---|---|
| | Example 2 | Example 7 | Example 8 |
| 10 (1680) | 100.0 | 100.0 | 100.0 |
| 14 (1190) | 100.0 | 100.0 | 100.0 |
| 16 (1000) | 100.0 | 100.0 | 100.0 |
| 25 (710) | 100.0 | 100.0 | 100.0 |
| 30 (590) | 98.0 | 99.4 | 98.5 |
| 35 (500) | 94.0 | 92.4 | 83.8 |
| 40 (420) | 75.4 | 71.7 | 55.5 |
| 45 (350) | 47.3 | 43.4 | 27.8 |
| 50 (287) | 10.1 | 9.0 | 4.9 |
| 60 (250) | 3.3 | 2.8 | 1.5 |
| 80 (177) | 0.9 | 0.7 | 0.3 |
| 120 (125) | 0.2 | 0.1 | 0.0 |
| Pan (<125) | 0.1 | 0.1 | 0.0 |
| BD (g/ml) | 0.43 | 0.43 | 0.40 |

Example 9

Polymerization in liquefied propylene

A stainless steel autoclave having an internal volume of 3 liters and of mixing type was purged with argon. Therein were placed 2.6 mmol of triethylaluminum, 0.39 mmol of phenyltrimethoxysilane and 70.7 mg of the solid catalyst component synthesized in Example 5. Then, hydrogen corresponding to a partial pressure of 0.12 bar (0.12 kg/cm$^2$) was added. Thereafter, 780 g of liquefied propylene was charged. The autoclave was heated to 65°C and polymerization was effected for 2 hours at that temperature.

After completion of the polymerization, the unreacted monomer was purged. The polymer formed was vacuum-dried for 2 hours at 60°C to obtain 195 g of a polypropylene powder. Hence, the catalyst had a catalyst activity (PP/cat) of 2760. The polypropylene had a content of cold xylene-soluble atactic component (the content is hereinafter abreviated to CXS), of 1.4% by weight. The polypropylene also had a BD of 0.44 g/ml.

Example 10

Propylene polymerization was conducted in the same manner as in Example 9 except that the solid

catalyst component used in Example 9 was changed to that synthesized in Example 2. There were obtained PP/cat=1680, CXS=2.5% by weight and BD=0.42 g/ml.

As appreciated from the foregoing, use of the catalyst system of the present invention can bring about the following meritorious effects.

(1) Since the present catalyst system has a very high catalyst activity per titanium atom, the polymer obtained contains, without being subjected to a special procedure for removal of catalyst residue, very small amounts of halogen and titanium atoms which have a general tendency of adversely affecting the coloring, stability and corrosivity of the polymer formed. Hence, no facility for removal of catalyst residue is required and the production cost of alpha-olefin polymer can be lowered.

(2) Use of the present catalyst system enables production of alpha-olefin polymer of very high stereoregularity. Consequently, the amount of amorphous polymer formed as a by-product is very small and an alpha-olefin polymer having excellent mechanical properties can be produced with no necessity of removing said amorphous polymer.

(3) Since the formation amount of low stereoregularity polymer soluble in polymerization medium is very small, no operational problems occur such as polymer adhesion to reactor, delivery pipes or flush hopper. Further, the raw material monomer(s) can be utilized efficiently.

(4) Use of the present catalyst system enables production of an alpha-olefin polymer of very high bulk density. Consequently, production facilities such as reactor and the like can be made smaller and higher productivity can be obtained.

(5) In the present catalyst system, the shape of silica gel can be reflected into the shape of the solid catalyst component of the catalyst system. This implies that the particle shape and size of alpha-olefin polymer obtained which are in close connection with those of the solid catalyst component can easily be controlled by altering the particle shape and size of silica gel.

(6) By using the present catalyst system, the amount of fine powders contained in alpha-olefin polymer obtained can be made very small. This can prevent problems such as pipe clogging caused by said fine powders.

**Claims**

1. A solid catalyst component containing a trivalent titanium compound, which is obtained by reducing a titanium compound represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$) with an organomagnesium compound in the presence of an organosilicon compound having at least one Si-O bond and a silica gel having a pore volume of, at pore radius of 7.5 to 2000 nm (75 to 20,000 Å), at least 0.65 ml/g to obtain a solid product, treating the solid product with an ester compound, and treating the ester-treated solid product with a mixture of an ether compound and titanium tetrachloride.

2. A solid catalyst component according to Claim 1, wherein the hydrocarbon group $R^1$ of the titanium compound represented by the general formula $Ti(OR^1)_nX_{4-n}$ is alkyl groups having 2 to 18 carbon atoms and/or aryl groups having 6 to 18 atoms.

3. A solid catalyst component according to Claim 1, wherein the X of the titanium compound represented by the general formula $Ti(OR^1)_nX_{4-n}$ is chlorine.

4. A solid catalyst component according to Claim 1, wherein the n of the titanium compound represented by the general formula $Ti(OR^1)_nX_{4-n}$ is a number satisfying $2\leqq n\leqq4$.

5. A solid catalyst component according to Claim 1, wherein the organomagnesium compound is a Grignard compound represented by the general formula $R^9MgX$ (wherein $R^9$ is a hydrocarbon group having 1 to 20 carbon atoms and X is a halogen atom), or a dialkyl magnesium compound or a diaryl magnesium compound both represented by the general formula $R^{10}R^{11}Mg$ (wherein $R^{10}$ and $R^{11}$ are each a hydrocarbon group having 1 to 20 carbon atoms).

6. A solid catalyst component according to Claim 1, wherein the organosilicon compound having at least one Si-O bond is represented by the following general formula:

$$Si(OR^3)_mR^4_{4-m},$$

$$R^5(R^6_2SiO)_pSiR^7_3 \text{ or}$$

$$(R^8_2SiO)_q$$

(wherein $R^3$ is a hydrocarbon group having 1 to 20 carbon atoms; $R^4$, $R^5$, $R^6$, $R^7$ and $R^8$ are each a hydrocarbon group having 1 to 20 carbon atoms or a hydrogen atom; m is a number satisfying $0<m\leqq4$; p is an integer of 1 to 1,000; and q is an integer of 2 to 1,000).

7. A solid catalyst component according to Claim 6, wherein the organosilicon compound having at least one Si-O bond is an alkoxysilane compound represented by the general formula $Si(OR^3)_mR^4_{4-m}$, in which m is a number satisfying $1\leqq m\leqq4$.

8. A solid catalyst component according oo Claim 1, wherein the pore volume of, at pore radius of 7.5 to 2000 nm (75 to 20,000 Å), the silica gel is 0.8 ml/g or more.

9. A solid catalyst component according to Claim 1, wherein the ester compound is olefin carboxylic acid ester or phthalic acid ester.

10. A solid catalyst component according to Claim 2, wherein the organosilicon compound having Si-O bonds is used in an amount of 1 to 50 in terms of the atomic ratio of silicon atom to titanium atom in titanium compound.

11. A solid catalyst component according to Claim 1 or 2, wherein the organomagnesium compound is used in an amount of 0.1 to 10 in terms of the atomic ratio of the sum of titanium atom and silicon atom to magnesium atom.

12. A solid catalyst component according to Claim 1, wherein the silica gel is used in an amount of 20 to 90% by weight in terms of % by weight in solid product.

13. A solid catalyst component according to Claim 1, wherein the ester compound is used in an amount of 0.1 to 50 moles per 1 mole of titanium atom in solid product.

14. A solid catalyst component according to Claim 1, wherein the ether compound is used in an amount of 0.1 to 100 moles per 1 mole of titanium atom in solid product.

15. A solid catalyst component according to Claim 1, wherein titanium tetrachloride is used in an amount of 2 to 2,000 moles per 1 mole of titanium atom in solid product and in an amount of 1 to 100 moles per 1 mole of ether compound.

16. A solid catalyst component according to Claim 1, wherein the solid product is treated with an ester compound in a diluent.

17. A solid catalyst component according to Claim 16, wherein the diluent is an aromatic hydrocarbon or a halogenated hydrocarbon.

18. A solid catalyst component according to Claim 1, wherein the ester-treated solid product is treated with an ether compound and titanium tetrachloride in a slurry state using a solvent.

19. A solid catalyst component according to Claim 18, wherein the solvent is an aromatic hydrocarbon or a halogenated hydrocarbon.

20. A catalyst system for alpha-olefin polymerization comprising:

(A) a solid catalyst component containing a trivalent titanium compound, which is obtained by reducing a titanium compound represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$) with an organomagnesium compound in the presence of an organosilicon compound having at least one Si-O bond and a silica gel having a pore volume of, at pore radius of 7.5 to 2000 nm (75 to 20,000 Å), at least 0.65 ml/g to obtain a solid product, treating the solid product with an ester compound, and treating the ester-treated solid with a mixture of an ether compound and titanium tetrachloride,

(B) an organoaluminum compound, and

(C) a silicone compound having at least one Si—OR² bond (wherein $R^2$ is a hydrocarbon group having 1 to 20 carbon atoms).

21. A catalyst system for alpha-olefin polymerization according to Claim 20, wherein the organoaluminum compound (B) is a compound having at least one Al-C bond within the molecule and represented by the general formula

$$R^{12}_{\gamma}AlY_{3-\gamma} \text{ or}$$

$$R^{13}R^{14}Al—O—AlR^{15}R^{16}$$

(wherein $R^{12}$, $R^{13}$, $R^{14}$, $R^{15}$ and $R^{16}$ are each a hydrocarbon group having 1 to 8 carbon atoms; Y is a halogen atom, a hydrogen atom or an alkoxy group; and γ is a number of satisfying $2\leqq\gamma\leqq3$).

22. A catalyst system for alpha-olefin polymerization according to Claim 21, wherein the organoaluminum compound is a trialkylaluminum, a mixture of a trialkylaluminum and a dialkylaluminum halide, or an alkyl alumoxane.

23. A catalyst system for alpha-olefin polymerization according to Claim 20, wherein the silicon compound (C) is an alkoxysilane compound represented by the general formula $R^{17}_aSi(OR^2)_{4-a}$ (wherein $R^2$ and $R^{17}$ are each a hydrocarbon group of 1 to 20 carbon atoms and a is a number satisfying $0\leqq a\leqq3$).

24. A catalyst system for alpha-olefin polymerization according to Claim 23, wherein in the general formula of the alkoxysilane compound, $R^2$ is a straight chain alkyl group of 1 to 10 carbon atoms and at least one of $R^{17}$s is an aryl group.

25. A process for producing an alpha-olefin polymer, which comprises homopolymerizing an alpha-olefin or copolymerizing alpha-olefins using a catalyst system comprising:

(A) a solid catalyst component containing a trivalent titanium compound, which is obtained by reducing a titanium compound represented by the general formula $Ti(OR^1)_nX_{4-n}$ (wherein $R^1$ is a hydrocarbon group of 1 to 20 carbon atoms; X is a halogen atom; and n is a number satisfying $0<n\leqq4$) with an organomagnesium compound in the presence of an organosilicon compound having at least one Si-O bond and a silica gel having a pore volume of, at pore radius of 7.5 to 2000 nm (75 to 20,000 Å), at least 0.65 ml/g to obtain a solid product, treating the solid product with an ester compound, and treating the ester-treated solid with a mixture of an ether compound and titanium tetrachloride,

(B) an organoaluminum compound, and

(C) a silicon compound having at least one Si-$OR^2$ bond (wherein $R^2$ is a hydrocarbon group having 1 to 20 carbon atoms),

at a temperature of −30°C to 200°C under a pressure of 3 to 101 bar (3 to 100 atm.).

**Patentansprüche**

1. Feste Katalysatorkomponente, enthaltend eine dreiwertige Titanverbindung, die erhalten worden ist durch Reduzieren einer Titanverbindung der allgemeinen Formel $Ti(OR^1)_nX_{4-n}$ (worin $R^1$ einen Kohlenwasserstoffrest mit 1 bis 20 Kohlenstoffatomen bedeutet; X ein Halogenatom bedeutet; und n eine Zahl bedeutet, die der Beziehung $0<n\leq 4$ genügt) mit einer Organomagnesiumverbindung in Gegenwart einer Organosiliciumverbindung mit mindestens einer Si-O-Bindung und eines Kieselgels mit einem Porenvolumen von mindestens 0,65 ml/g bei einem Porenradius von 7,5 bis 2000 nm (75 bis 20 000 Å) unter Bildung eines festen Produkts, Behandeln des festen Produkts mit einer Esterverbindung und Behandeln des mit dem Ester behandelten festen Produkts mit einem Gemisch aus einer Etherverbindung und Titantetrachlorid.

2. Feste Katalysatorkomponente nach Anspruch 1, wobei der Kohlenwasserstoffrest $R^1$ der Titanverbindung der allgemeinen Formel $Ti(OR^1)_nX_{4-n}$ einen Alkylrest mit 2 bis 18 Kohlenstoffatomen und/oder einen Arylrest mit 6 bis 18 Kohlenstoffatomen bedeutet.

3. Feste Katalysatorkomponente nach Anspruch 1, wobei der Rest X der Titanverbindung der allgemeinen Formel $Ti(OR^1)_nX_{4-n}$ Chlor bedeutet.

4. Feste Katalysatorkomponente nach Anspruch 1, wobei das n der Titanverbindung der allgemeinen Formel $Ti(OR^1)_nX_{4-n}$ eine Zahl bedeutet, die der Beziehung $2\leq n\leq 4$ genügt.

5. Feste Katalysatorkomponente nach Anspruch 1, wobei es sich bei der Organomagnesiumverbindung um eine Grignard-Verbindung der allgemeinen Formel $R^9MgX$ (worin $R^9$ einen Kohlenwasserstoffrest mit 1 bis 20 Kohlenstoffatomen bedeutet und X ein Halogenatom bedeutet) oder um eine Dialkylmagnesiumverbindung oder eine Diarylmagnesiumverbindung jeweils der allgemeinen Formel $R^{10}R^{11}Mg$ (worin $R^{10}$ und $R^{11}$ jeweils einen Kohlenwasserstoffrest mit 1 bis 20 Kohlenstoffatomen bedeuten) handelt.

6. Feste Katalysatorkomponente nach Anspruch 1, wobei die Organosiliciumverbindung mit mindestens einer Si-O-Bindung durch folgende allgemeine Formeln wiedergegeben wird

$$Si(OR^3)_mR^4_{4-m},$$

$$R^5(R^6_2SiO)_pSiR^7_3 \text{ oder}$$

$$(R^8_2SiO)_q$$

(worin $R^3$ einen Kohlenwasserstoffrest mit 1 bis 20 Kohlenstoffatomen bedeutet; und $R^4$, $R^5$, $R^6$, $R^7$ und $R^8$ jeweils einen Kohlenwasserstoffrest mit 1 bis 20 Kohlenstoffatomen oder ein Wasserstoffatom bedeuten; m eine ganze Zahl bedeutet, die der Beziehung $0<m\leq 4$ genügt; p eine ganze Zahl mit einem Wert von 1 bis 1000 ist; und q eine ganze Zahl mit einem Wert von 2 bis 1000 ist).

7. Feste Katalysatorkomponente nach Anspruch 6, wobei es sich bei der Organosiliciumverbindung mit mindestens einer Si-O-Bindung um eine Alkoxysilanverbindung der allgemeinen Formel $Si(OR^3)_mR^4_{4-m}$ handelt, in der m eine Zahl bedeutet, die der Beziehung $1\leq m\leq 4$ genügt.

8. Feste Katalysatorkomponente nach Anspruch 1, wobei das Porenvolumen des Kieselgels 0,8 ml/g oder mehr bei einem Porenradius von 7,5 bis 2000 nm (75 bis 20 000 Å) beträgt.

9. Feste Katalysatorkomponente nach Anspruch 1, wobei es sich bei der Esterverbindung um einen Olefincarbonsäureester oder einen Phthalsäureester handelt.

10. Feste Katalysatorkomponente nach Anspruch 2, wobei die Organosiliciumverbindung mit Si-O-Bindungen in einer Menge von 1 bis 50, angegeben als Atomverhältnis von Siliciumatomen zu Titanatomen in der Titanverbindung, verwendet wird.

11. Feste Katalysatorkomponente nach Anspruch 1 oder 2, wobei die Organomagnesiumverbindung in einer Menge von 0,1 bis 10, angegeben als Atomverhältnis der Summe der Titan- und Siliciumatome zu den Magnesiumatomen, verwendet wird.

12. Fest Katalysatorkomponente nach Anspruch 1, wobei das Kieselgel in einer Menge von 20 bis 90 Gew.-%, angegeben als Gewichtsprozent im festen Produkt, verwendet wird.

13. Feste Katalysatorkomponente nach Anspruch 1, wobei die Esterverbindung in einer Menge von 0,1 bis 50 Mol pro 1 Mol Titanatome im festen Produkt verwendet wird.

14. Feste Katalysatorkomponente nach Anspruch 1, wobei die Etherverbindung in einer Menge von 0,1 bis 100 Mol pro 1 Mol Titanatome im festen Produkt verwendet wird.

15. Feste Katalysatorkomponente nach Anspruch 1, wobei das Titantetrachlorid in einer Menge von 2 bis 2000 Mol pro 1 Mol Titanatome im festen Produkt und in einer Menge von 1 bis 100 Mol pro 1 Mol Etherverbindung verwendet wird.

16. Feste Katalysatorkomponente nach Anspruch 1, wobei das feste Produkt mit einer Esterverbindung in einem Verdünnungsmittel behandelt wird.

17. Feste Katalysatorkomponente nach Anspruch 16, wobei es sich bei dem Verdünnungsmittel um einen aromatischen Kohlenwasserstoff oder einen halogenierten Kohlenwasserstoff handelt.

18. Feste Katalysatorkomponente nach Anspruch 1, wobei das mit dem Ester behandelte feste Produkt mit einer Etherverbindung und Titantetrachlorid in einem aufgeschlämmten Zustand unter Verwendung eines Lösungsmittels behandelt wird.

19. Feste Katalysatorkomponente nach Anspruch 18, wobei es sich bei dem Lösungsmittel um einen aromatischen Kohlenwasserstoff oder einen halogenierten Kohlenwasserstoff handelt.

20. Katalysatorsystem zur Polymerisation von alpha-Olefinen, umfassend:

(A) eine feste Katalysatorkomponente, enthaltend eine dreiwertige Titanverbindung, die erhalten worden ist durch Reduzieren einer Titanverbindung der allgemeinen Formel $Ti(OR^1)_nX_{4-n}$ (worin $R^1$ einen Kohlenwasserstoffrest mit 1 bis 20 Kohlenstoffatomen bedeutet; X ein Halogenatom bedeutet; und n eine Zahl bedeutet, die der Beziehung $0<n\leq4$ genügt) mit einer Organomagnesiumverbindung in Gegenwart einer Organosiliciumverbindung mit mindestens einer Si-O-Bindung und eines Kieselgels mit einem Porenvolumen von mindestens 0,65 ml/g bei einem Porenradius von 7,5 bis 2000 nm (75 bis 20 000 Å) unter Bildung eines festen Produkts, Behandeln des festen Produkts mit einer Esterverbindung und Behandeln des mit dem Ester behandelten festen Produkts mit einem Gemisch aus einer Etherverbindung und Titantetrachlorid,

(B) eine Organoaluminiumverbindung und

(C) eine Siliciumverbindung mit mindestens einer Si-$OR^2$-Bindung (wobei $R^2$ einen Kohlenwasserstoffrest mit 1 bis 20 Kohlenstoffatomen bedeutet).

21. Katalysatorsystem zur Polymerisation von alpha-Olefinen nach Anspruch 20, wobei es sich bei der Organoaluminiumverbindung (B) um eine Verbindung mit mindestens einer Al-C-Bindung innerhalb des Moleküls handelt, die den allgemeinen Formeln

$$R^{12}{}_{\gamma}AlY_{3-\gamma} \text{ oder}$$

$$R^{13}R^{14}Al—O—AlR^{15}R^{16}$$

entspricht (worin $R^{12}$, $R^{13}$, $R^{14}$, $R^{15}$ und $R^{16}$ jeweils einen Kohlenwasserstoffrest mit 1 bis 8 Kohlenstoffatomen bedeuten; Y ein Halogenatom, ein Wasserstoffatom oder einen Alkoxyrest bedeutet; und γ eine Zahl bedeutet, die der Beziehung $2\leq\gamma\leq3$ genügt).

22. Katalysatorsystem zur Polymerisation von alpha-Olefinen nach Anspruch 21, wobei es sich bei der Organoaluminiumverbindung um ein Trialkylaluminium, ein Gemisch aus einem Trialkylaluminium und einem Dialkylaluminiumhalogenid oder ein Alkylalumoxan handelt.

23. Katalysatorsystem zur Polymerisation von alpha-Olefinen nach Anspruch 20, wobei es sich bei der Siliciumverbindung (C) um eine Alkoxysilanverbindung der allgemeinen Formel $R^{17}{}_aSi(OR^2)_{4-a}$ handelt (wobei $R^2$ und $R^{17}$ jeweils einen Kohlenwasserstoffrest mit 1 bis 20 Kohlenstoffatomen bedeuten und a eine Zahl bedeutet, die der Beziehung $0\leq a\leq3$ genügt).

24. Katalysatorsystem zur Polymerisation von alpha-Olefinen nach Anspruch 23, wobei ein der allgemeinen Formel der Alkoxysilanverbindung $R^2$ einen geradkettigen Alkylrest mit 1 bis 10 Kohlenstoffatomen bedeutet und mindestens einer der reste $R^{17}$ einen Arylrest bedeutet.

25. Verfahren zur Herstellung eines alpha-Olefinpolymeren, umfassend die Homopolymerisation eines alpha-Olefins oder die Copolymerisation von alpha-Olefinen unter Verwendung eines Katalysatorsystems, wobei das Katalysatorsystem folgende Bestandteile enthält:

(A) eine feste Katalysatorkomponente, enthaltend eine dreiwertige Titanverbindung, die erhalten worden ist durch Reduzieren einer Titanverbindung der allgemeinen Formel $Ti(OR^1)_nX_{4-n}$ (worin $R^1$ einen Kohlenwasserstoffrest mit 1 bis 20 Kohlenstoffatomen bedeutet; X ein Halogenatom bedeutet; und n eine Zahl bedeutet, die der Beziehung $0<n\leq4$ genügt) mit einer Organomagnesiumverbindung in Gegenwart einer Organosiliciumverbindung mit mindestens einer Si-O-Bindung und eines Kieselgels mit einem Porenvolumen von mindestens 0,65 ml/g bei einem Porenradius von 7,5 bis 2000 nm (75 bis 20 000 Å) unter Bildung eines festen Produkts, Behandeln des festen Produkts mit einer Esterverbindung und Behandeln des mit dem Ester behandelten festen Produkts mit einem Gemisch aus einer Etherverbindung und Titantetrachlorid,

(B) eine Organoaluminiumverbindung und

(C) eine Siliciumverbindung mit mindestens einer Si-$OR^2$-Bindung (wobei $R^2$ einen Kohlenwasserstoffrest mit 1 bis 20 Kohlenstoffatomen bedeutet),

bei einer Temperatur von −30°C bis 200°C bei einem Druck von 3 bis 101 bar (3 bis 100 atm).

**Revendications**

1. Composant de catalyseur solide contenant un composé du titane trivalent, qui est obtenu par réduction d'un composé du titane représenté par la formule générale $Ti(OR^1)_nX_{4-n}$ (dans laquelle $R^1$ est un groupement hydrocarboné de 1 à 20 atomes de carbone; X est un atome d'halogène; et n est un nombre satisfaisant la relation $0<n\leq4$) avec un composé organomagnésien en présence d'un composé organosilicié ayant un moins une liaison Si-O et d'un gel de silice ayant un volume de pores, à un rayon de

pores de 7,5 à 2000 nm (75 à 20 000 Å) d'au moins 0,65 ml/g, pour obtenir un produit solide, traitement du produit solide par un ester, puis traitement du produit solide traité par l'ester par un mélange d'un éther et de tétrachlorure de titane.

2. Composant de catalyseur solide selon la revendication 1, dans lequel le groupement hydrocarboné $R^1$ du composé du titane représenté par la formule générale $Ti(OR^1)_nX_{4-n}$ est choisi parmi les groupements alkyle ayant de 2 à 18 atomes de carbone et/ou aryle ayant de 6 à 18 atomes de carbone.

3. Composant de catalyseur solide selon la revendication 1, dans lequel X dans le composé du titane représenté par la formule générale $Ti(OR^1)_nX_{4-n}$ est le chlore.

4. Composant de catalyseur solide selon la revendication 1, dans lequel n dans le composé du titane représenté par la formule générale $Ti(OR^1)_nX_{4-n}$ est un nombre satisfaisant la relation $2 \leq n \leq 4$.

5. Composant de catalyseur solide selon la revendication 1, dans lequel le composé organomagnésien est un réactif de Grignard représenté par la formule générale $R^9MgX$ (dans laquelle $R^9$ est un groupement hydrocarboné de 1 à 20 atomes de carbone et X est un atome d'halogène), ou un dialkylmagnésien ou un diarylmagnésien tous deux représentés par la formule générale $R^{10}R^{11}Mg$ (dans laquelle $R^{10}$ et $R^{11}$ sont chacun un groupement hydrocarboné ayant de 1 à 20 atomes de carbone).

6. Composant de catalyseur solide selon la revendication 1, dans lequel le composé organosilicié ayant au moins une liaison Si-O est représenté par les formules générales suivantes:

$$Si(OR^3)_mR^4_{4-m}$$

$$R^5(R^6_2SiO)_pSiR^7_3 \text{ ou}$$

$$(R^8_2SiO)_q$$

dans lesquelles $R^3$ est un groupement hydrocarboné ayant de 1 à 20 atomes de carbone; $R^4$, $R^5$, $R^6$, $R^7$ et $R^8$ sont chacun un groupement hydrocarboné ayant de 1 à 20 atomes de carbone ou un atome d'hydrogène; m est un nombre satisfaisant la relation $0 < m \leq 4$; p est un entier de 1 à 1000; et q est un entier de 2 à 1000.

7. Composant de catalyseur solide selon la revendication 6 dans lequel le composé organosilicié ayant au moins une liaison Si-O est un alcoxysilane représenté par la formule générale $Si(OR^3)_mR^4_{4-m}$ dans laquelle m est un nombre satisfaisant la relation $1 \leq m \leq 4$.

8. Composant de catalyseur solide selon la revendication 1, dans lequel le volume des pores, à un rayon de pores de 7,5 à 2000 nm (75 à 20 000 Å), du gel de silice est de 0,8 ml/g ou plus.

9. Composant de catalyseur solide selon la revendication 1, dans lequel l'ester est un ester d'acide carboxylique oléfinique ou un ester d'acide phtalique.

10. Composant de catalyseur solide selon la revendication 2, dans lequel le composé organosilicié ayant des liaisons Si-O est utilisé à raison de 1 à 50 fois le rapport atomique des atomes de silicium aux atomes de titane dans le composé du titane.

11. Composant de catalyseur solide selon la revendication 1 ou 2, dans lequel le composé organomagnésien est utilisé à raison de 0,1 à 10 fois le rapport atomique de la somme des atomes de titane et des atomes de silicium aux atomes de magnésium.

12. Composant de catalyseur solide selon la revendication 1, dans lequel le gel de silice est utilisé à raison de 20 à 90% en poids par rapport au produit solide.

13. Composant le catalyseur solide selon la revendication 1, dans lequel l'ester est utilisé à raison de 0,1 à 50 moles par mole d'atomes de titane dans le produit solide.

14. Composant de catalyseur solide selon la revendication 1, dans lequel l'éther est utilisé à raison de 0,1 à 100 moles par mole d'atomes de titane dans le produit solide.

15. Composant de catalyseur solide selon la revendication 1, dans lequel le tétrachlorure de titane est utilisé à raison de 2 à 2000 moles par mole d'atomes de titane dans le produit solide et à raison de 1 à 100 moles par mole d'éther.

16. Composant de catalyseur solide selon la revendication 1, dans lequel le produit solide est traité par un ester dans un diluant.

17. Composant de catalyseur solide selon la revendication 16, dans lequel le diluant est un hydrocarbure aromatique ou un hydrocarbure halogéné.

18. Composant de catalyseur solide selon la revendication 1, dans lequel le produit solide traité par un ester est traité par un éther et du tétrachlorure de titane à l'état de suspension en utilisant un solvant.

19. Composant de catalyseur solide selon la revendication 18, dans lequel le solvant est un hydrocarbure aromatique ou un hydrocarbure halogéné.

20. Système catalytique pour la polymérisation d'α-oléfines comprenant

A) un composant de catalyseur solide contenant un composé du titane trivalent, qui est obtenu par réduction d'un composé du titane représenté par la formule générale $Ti(OR^1)_nX_{4-n}$ (dans laquelle $R^1$ est un groupement hydrocarboné de 1 à 20 atomes de carbone; X est un atome d'halogène; et n est un nombre satisfaisant la relation $0 < n \leq 4$) avec un composé organomagnésien en présence d'un composé organosilicié ayant au moins une liaison Si-O et d'un gel de silice ayant un volume de pores, à un rayon de pores de 7,5 à 2000 nm (75 à 20 000 Å) d'au moins 0,65 ml/g, pour obtenir un produit solide, traitement du

produit solide par un ester, puis traitement du produit solide traité par l'ester par un mélange d'un éther et de tétrachlorure de titane,

B) un composé organo-aluminique, et

C) un composé du silicium ayant au moins une liaison Si-$OR^2$ (où $R^2$ est un groupement hydrocarboné ayant de 1 à 20 atomes de carbone).

21. Système catalytique pour la polymérisation d'α-oléfines selon la revendication 20, dans lequel le composé organo-aluminique B) est un composé ayant au moins une liaison Al-C dans la molécule et représenté par les formules générales

$$R^{12}{}_{\gamma}AlY_{3-\gamma} \text{ ou}$$

$$R^{13}R^{14}Al—O—AlR^{15}R^{16}$$

dans lesquelles $R^{12}$, $R^{13}$, $R^{14}$, $R^{15}$, $R^{16}$ sont chacun un groupement hydrocarboné ayant de 1 à 8 atomes de carbone; Y est un atome d'halogène ou d'hydrogène ou un groupement alcoxy; et γ est un nombre satisfaisant la relation $2 \leq \gamma \leq 3$.

22. Système catalytique pour la polymérisation d'α-oléfines selon la revendication 21, dans lequel le composé organo-aluminique est un trialkylaluminium, un mélange d'un trialkylaluminium et d'un halogénure de dialkylaluminium ou un alkyl-alumoxane.

23. Système catalytique pour la polymérisation d'α-oléfines selon la revendication 20, dans lequel le composé du silicium C) est un alcoxysilane représenté par la formule générale $R^{17}{}_aSi(OR^2)_{4-a}$ dans laquelle $R^2$ et $R^{17}$ sont chacun un groupement hydrocarboné de 1 à 20 atomes de carbone et a est un nombre satisfaisant la relation $0 \leq a \leq 3$.

24. Système catalytique pour la polymérisation d'α-oléfines selon la revendication 23, dans lequel, dans la formule générale de l'alcoxysilane, $R^2$ est un groupement alkyle à chaîne droite ayant de 1 à 10 atomes de carbone et au moins l'un des groupements $R^{17}$ est un groupement aryle.

25. Procédé de production d'une polymère d'α-oléfines, qui consiste à homopolymériser une α-oléfine ou à copolymériser une α-oléfine en utilisant un système catalytique comprenant:

A) un composant de catalyseur solide contenant un composé du titane trivalent, qui est obtenu par réduction d'un composé du titane représenté par la formule générale $Ti(OR^1)_nX_{4-n}$ (dans laquelle $R^1$ est un groupement hydrocarboné de 1 à 20 atomes de carbone; X est un atome d'halogène; et n est un nombre satisfaisant la relation $0 < n \leq 4$) avec un composé organomagnésien en présence d'un composé organosilicié ayant au moins une liaison Si-O et d'un gel de silice ayant un volume de pores, à un rayon de pores de 7,5 à 2000 nm (75 à 20 000 Å) d'au moins 0,65 ml/g, pour obtenir un produit solide, traitement du produit solide par un ester, puis traitement du produit solide traité par l'ester par un mélange d'un éther et de tétrachlorure de titane,

B) un composé organo-aluminique, et

C) un composé du silicium ayant au moins une liaison Si-$OR^2$ (où $R^2$ est un groupement hydrocarboné ayant de 1 à 20 atomes de carbone),

à une température de −30°C à +200°C sous une pression de 3 à 101 bar (3 à 100 atm).

F I G. 1

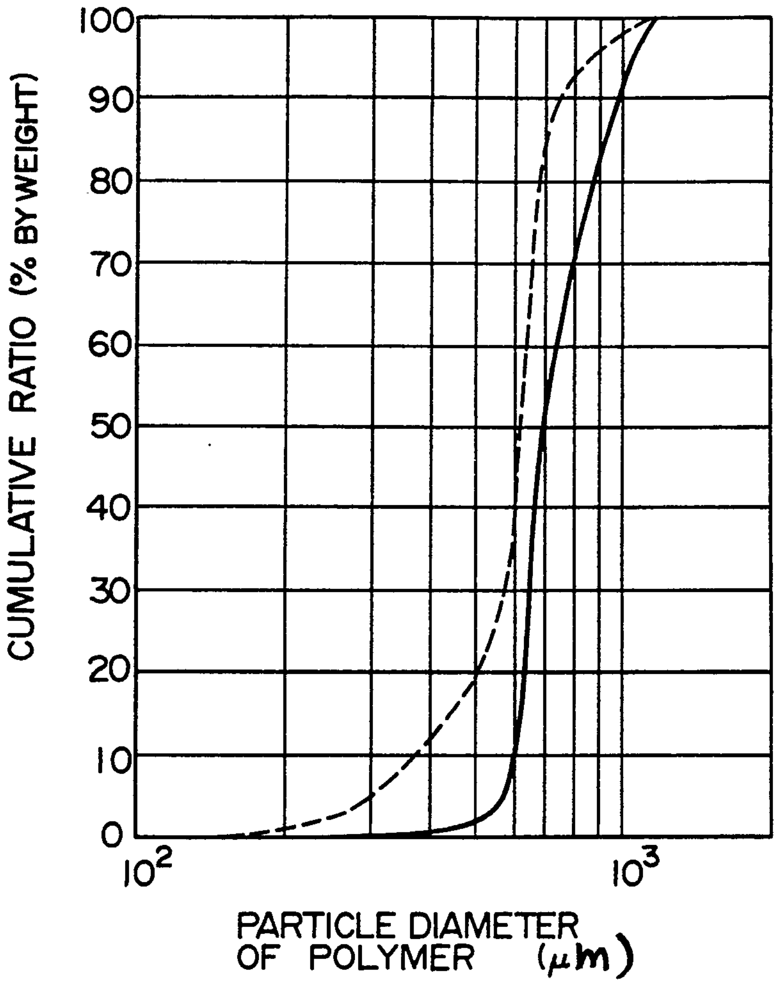
100
90
80
70
60
50
40
30
20
10
0
CUMULATIVE RATIO (% BY WEIGHT)
$10^2$
$10^3$
PARTICLE DIAMETER
OF POLYMER (μm)

FIG. 2

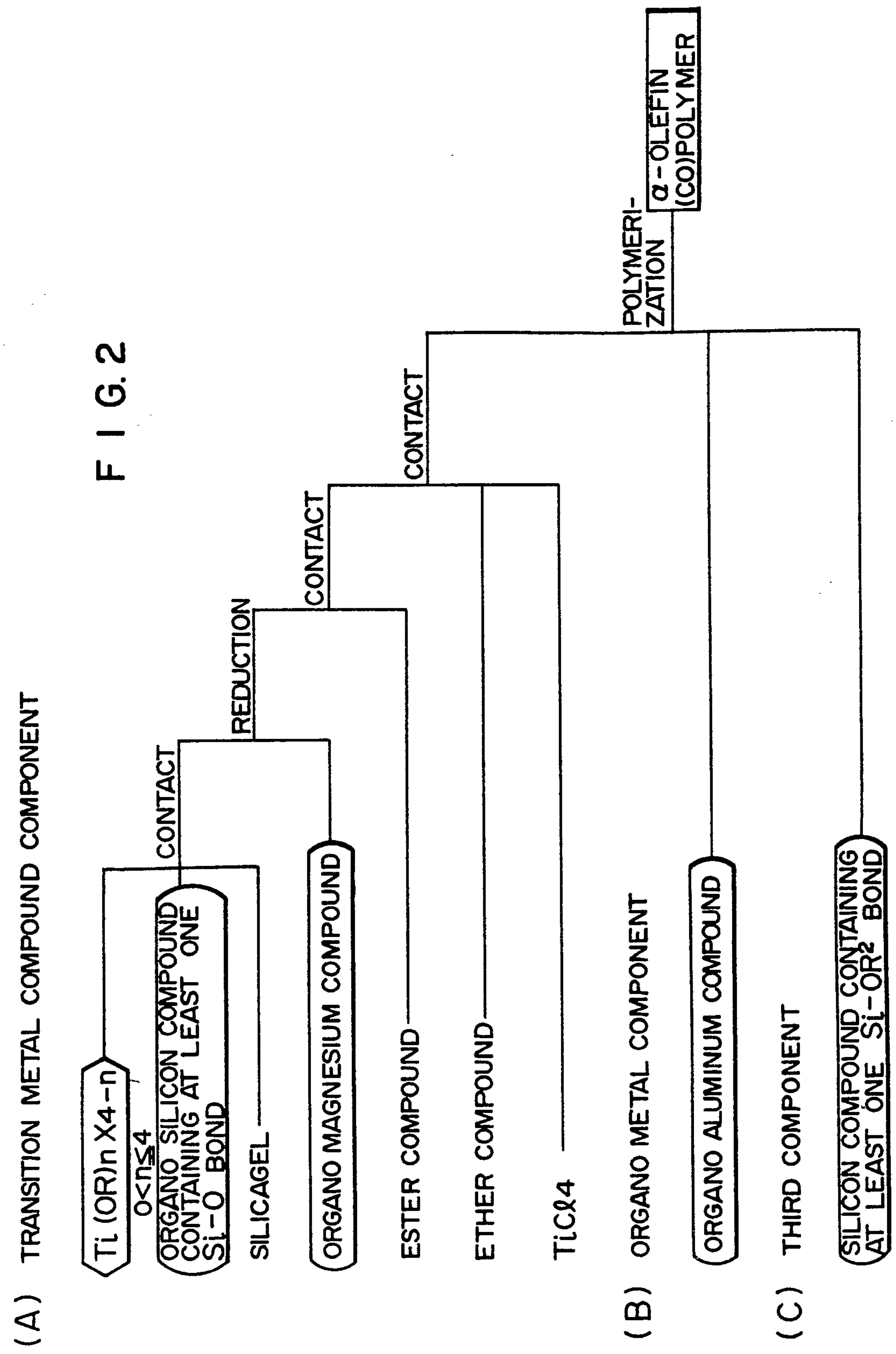
(A) TRANSITION METAL COMPOUND COMPONENT
Ti (OR)n X4-n
0<n≦4
ORGANO SILICON COMPOUND CONTAINING AT LEAST ONE Si-O BOND
SILICAGEL
ORGANO MAGNESIUM COMPOUND
ESTER COMPOUND
ETHER COMPOUND
TiCl4
(B) ORGANO METAL COMPONENT
ORGANO ALUMINUM COMPOUND
(C) THIRD COMPONENT
SILICON COMPOUND CONTAINING AT LEAST ONE Si-OR2 BOND
CONTACT
REDUCTION
CONTACT
CONTACT
POLYMERI-ZATION
α-OLEFIN (CO)POLYMER